# EUROPEAN PATENT APPLICATION

(11) **EP 4 560 167 A1**
(43) Date of publication of application: **28.05.2025**
(21) Application number: 23211334.0
(22) Date of filing: 21.11.2023
(51) Int. Cl.: F16K 3/08

(54) **FLOW RESTRICTOR**

(71) Applicant: B/E Aerospace, Inc., Winston-Salem, NC 27105 (US)
(72) Inventor:
(74) Representative: Dehns

(57) **Abstract**

A flow restrictor (100) having a flow path (130). The flow restrictor (100) having: a first obstructer (111) arranged to occupy a first area of the flow path (130); and a second obstructer (121) arranged to occupy a second area of the flow path (130). The first obstructer (111) is movable relative to the second obstructer (121) so as to vary an amount of overlap between the first area and the second area and thereby vary the area of the flow path (130) that is blocked by the combination of the first obstructer (111) and the second obstructer (121).

## Description

### TECHNICAL FIELD

This disclosure relates to flow restrictors, and in particular to adjustable flow restrictors.

### BACKGROUND

It may be desirable, or necessary, to limit the flow of a fluid through an aperture. For example, a hose, a pipe, an outlet or similar. This may be achieved by using a flow restrictor, for example in order to partially block the flow path through the aperture to limit the fluid flow rate.

Some applications may require that the fluid flow rate through different apertures is limited differently. For example, a galley, such as a galley in an aircraft, may have several appliances that are supplied with a fluid, for example water. One or more of these appliances may require the supply of water to be limited to ensure compliance with their respective operating instructions. For instance, the galley may include one or more of a galley waste disposal unit (GWDU), a hot beverage maker, a tap and/or a water heater. These may require different flow rate limitations. For example, the GWDU may require that the flow rate is limited to 0.15 l/min, the hot beverage maker may require that the flow rate is limited to 0.25 l/min, the tap may require that the flow rate is limited to 2.2 l/min and/or the water heater may require that the flow rate is limited to 3.2 l/min. Therefore, each appliance may require a respective flow restrictor to provide a certain flow rate limitation.

Currently, flow restrictors are designed and manufactured to provide one particular flow rate limitation. Therefore, in applications that require multiple flow rate limitations, multiple different flow restrictor are required. This may result in relatively high costs. For example, the administrative cost of purchasing several different parts and/or the administrative cost of managing a stock of several different parts. Further, it may be more expensive to buy lower volumes of several different parts than higher volumes of a single part.

A further problem is that certain less expensive off-the-shelf flow restrictors are often not made to a sufficiently high tolerance to provide an accurate flow rate limitation. The consequence is that each off-the-shelf flow restrictor needs to be tested individually to assess whether it accurately limits the flow rate to meet the required specifications. The alternative of purchasing restrictors that are manufactured to better tolerances is not cost-effective.

### SUMMARY

When viewed from a first aspect, the present disclosure provides a flow restrictor having a flow path, the flow restrictor comprising:
a first obstructer arranged to occupy a first area of the flow path; and
a second obstructer arranged to occupy a second area of the flow path;
wherein the first obstructer is movable relative to the second obstructer so as to vary an amount of overlap between the first area and the second area and thereby vary the area of the flow path that is blocked by the combination of the first obstructer and the second obstructer.

By enabling variation of the area of the flow path that is blocked by the first and second obstructers, the area of the flow path that is not blocked is also varied. Flow paths of different areas provide different flow restrictions. Therefore, a flow restrictor according to the first aspect may be adjusted so as to adjust the flow rate limitation provided by the flow restrictor.

A flow path may be any path through the restrictor from one side of the obstructers to another side of the obstructers along which a fluid may flow.

The flow path may take a variety of forms. In some examples, it may be substantially linear. It may have an axis, for example a central axis, in a direction of the flow along the flow path. In some examples, the flow path is rotationally symmetric about the axis. For example, the flow path may have a substantially circular cross-section. The flow path may be a single path or it may be several parallel paths (or it may be a single path that divides into several paths and/or several paths that join into a single path).

In some examples, the first obstructer and/or the second obstructer comprises one or more radially extending projections. For example, when viewed along the flow path, the radially extending projections may extend radially inwards/outwards. For example, the radially extending projections may extend radially outwards away from a centre (e.g. from an axis) or they may extend radially inwards towards the centre (e.g. towards an axis).

In some examples, the radially extending projections of the first obstructer and/or the second obstructer extend radially inwardly from an outer rim. The outer rim may provide the support for the radially extending projections which may extend only partially into the flow path (i.e. they do not extend as far as the centre). For example, the radially extending projections may be inwardly projecting teeth.

In some examples, the outer rim occupies part of the flow path. This allows the obstructer to provide a significant obstruction by blocking area of the flow path at its outer region, thereby limiting flow to the inner region. Variations of the obstructed area may thus be limited to the inner region of the flow path. In the case of a circular cross-section flow path, the outer region may be a substantially ringshaped region outside a selected radius (the inner radius of the outer rim) and the inner region may be a substantially circular region inside that selected radius.

In some examples, the radially extending projections of the first obstructer and/or the second obstructer extend radially outwardly from a central hub. In some examples, the radially extending projections may take the form of blades extending outwardly from the hub. Varying the radial length of the blades and/or the circumferential width of the blades can easily vary the amount of area obstructed by the obstructer. The central hub may be at, or proximate to, an axis of the flow path, for example a central axis of the flow path. In some examples, the radially extending projections may extend radially outwards from a central hub and radially inwards from an outer rim. For instance, the radially extending projections may extend between the central hub and the outer rim (thus radially extending projections thus forming spokes of a wheel shape).

The first obstructer may be movable relative to the second obstructer in any suitable manner, for example the first obstructer may move laterally relative to the second obstructer. The first obstructer may be rotatable relative to the second obstructer. For example, the first obstructer may be pivoted at a point away from the central axis (e.g. at or near the outer edge of the flow path). In some examples, the first obstructer is rotatable about an axis of the flow path, e.g. a central axis of the flow path. Such rotation may be accomplished by mounting the first obstructer on an axle or spindle. The axle or spindle may be mounted to any part of the flow restrictor, but in some examples, the axle or spindle may extend from the second obstructer.

The flow restrictor may comprise a frame or housing to which both the first and second obstructers are attached. At least one of the first and second obstructers may be movable relative to the frame or housing.

In some examples, the first obstructer comprises a first central hub and the second obstructer comprises a second central hub.

In some examples, the first central hub is rotatably mounted to the second central hub. This arrangement is easy to assemble and may allow for assembly with only a small number of parts. This arrangement may also allow ease of movement of the first obstructer relative to the second obstructer, for example by simply rotating the first obstructer around its mounting point on the second obstructer.

In some examples, the first obstructer and the second obstructer each have at least 2-fold rotational symmetry around the axis of the flow path. The rotational symmetry may make assembly easier as the relative alignment of the parts has some redundancy.

In some examples, the first obstructer and the second obstructer each have 3-fold rotational symmetry about the axis of the flow path. In some examples, the first obstructer and the second obstructer each have 4-fold symmetry about the axis of the flow path.

In some examples, at least one of the first obstructer and the second obstructer comprises a cross shape. The centre of the cross may provide the first and/or second central hub. A cross shape may be particularly convenient and efficient to manufacture, due to its relative simplicity and regular shape, and so this may reduce cost and/or improve quality.

In some examples, the first area is the same as the second area. For example, the first obstructer and the second obstructer may have the same shape and size. In some examples, the first obstructer may be substantially the same as the second obstructer. Having the same area may allow the first area and the second area to fully overlap, which may enable a wide range of possible overlap areas and thus a wide range of flow rate limitations.

In some examples, the first area comprises the second area or the second area comprises the first area. For instance, if the second area comprises the first area, i.e. the size and shape of the first area, the first area may fully overlap with the second area so as to provide a wide range of possible overlap areas and flow rate limitations.

In some examples, the first obstructer is the same shape as the second obstructer. For example, the first area may be the same as the second area and the first obstructer may be the same shape as the second obstructer. In such examples, only a single part needs to be manufactured rather than two distinct parts. This can reduce manufacturing cost.

In some examples, the first obstructer is rotatable relative to the second obstructer. For example, as noted above, the first obstructer may be rotatable about an axis of the flow path, which may be a central axis of the flow path, and the second obstructer may be fixed relative to the axis of the flow path. In other examples, the second obstructer may not be fixed relative to the axis of the flow path, for example the first and second obstructer may be independently movable, for example rotatable, relative to the axis of the flow path. In some examples the first obstructer may be rotatably mounted on the second obstructer, e.g. on an axle or spindle extending therefrom.

In some examples, the first obstructer is rotatable relative to the second obstructer in only one direction. For example, the first obstructer may be able to rotate only clockwise or only anti-clockwise about the axis of the flow path (or about the second obstructer).

In some examples, the flow restrictor comprises a locating mechanism arranged to locate the first obstructer and the second obstructer in one of two or more predefined relative positions. For example, a first relative position may correspond with a first amount of overlap between the first area and the second area and the second relative position may correspond with a second amount of overlap between the first area and the second area so as to be able to set the amount of overlap to one of two or more predefined amounts. For example, the first obstructer may be movable relative to the second obstructer, and may be located in any of at least two predefined positions relative to the second obstructer. The predefined relative positions may be set according to a number of desired settings and/or uses of the flow restrictor.

In some examples, the locating mechanism is arranged such that when the first obstructer and the second obstructer are in a predefined relative position, the locating mechanism restricts further relative movement of the first and second obstructers. For example, once the first and/or second obstructer are in a predefined relative position, a force may have to be overcome in order to change the relative position of the first and/or second obstructer. For example, a detent, such as a mechanical detent, a magnetic detent or the like, may restrict movement of the first and/or second obstructer when in a predefined relative position by applying a detent force. This biases the flow restrictor to remain in a predefined arrangement (i.e. at a predefined flow restriction) in the absence of a sufficiently strong force.

In some examples, each of the two or more predefined relative positions defines a flow rate suitable for one of the following:
a galley beverage maker;
a galley espresso maker;
a galley water heater;
a galley steam oven;
a galley waste disposal unit;
a galley faucet.

Having pre-defined fixable positions which correspond with a certain galley appliance may be beneficial as it provides a single device that can be used for multiple appliances within a galley. Multiple galley appliances can be suitably installed and/or configured with the same component, the only difference being that the component is adjusted differently for different appliances.

In some examples, each of the two or more predefined relative positions defines a flow limit in one of the following ranges:
0.01 to 0.02 litres per minute;
0.1 to 0.2 litres per minute;
0.2 to 0.3 litres per minute;
0.5 to 1 litres per minute;
1.5 to 2.5 litres per minute;
2.5 to 5 litres per minute.

In some examples, each of the two or more predefined relative positions defines an area of the flow path that is not blocked by the combination of the first obstructer and the second obstructer in one of the following ranges:
0.5 mm² to 1.5 mm²;
2.5 mm² to 3.5 mm²;
4.0 mm² to 5.0 mm².

In some examples, the flow restrictor further comprises a visual indicator for each predefined relative position. For example, the flow restrictor may have a visual indicator which indicates that a certain position is suitable for a certain application, such as restricting the flow rate to a certain galley appliance. In some examples, the visual indicator may indicate a certain flow limit, a certain flow path area or the like. The visual indicator may be a coloured marker or a relief marker (e.g. a ridge or furrow) and may indicate a relative alignment between two parts. For example, aligning a mark on one part with each of a plurality of marks on another part may indicate each of a plurality of predefined relative positions as discussed above. The combination of a visual indicator with a detent (or the like) may allow particularly fast and convenient set up and thus fast and convenient installation and configuration of a plurality of appliances (e.g. in a galley).

In some examples, the restrictor comprises a first piece and a second piece; wherein the first piece comprises the first obstructer; wherein the second piece comprises the second obstructer; and wherein the first piece is adjacent to the second piece in a flow direction.

In some examples, the first piece is cylindrical. This may be a suitable shape for inserting the first piece within a liquid conduit having a circular aperture, such as a pipe, a hose, or the like so as to restrict flow through the aperture.

In some examples, the second piece is cylindrical.

In some examples, an outer surface of the first piece is flush with an outer surface of the second piece. For example, the first and second piece may together form a cylindrical flow restrictor having a uniform diameter. When inserted into a pipe or conduit, the outer surface of the flow restrictor may closely match the inner surface of the pipe or conduit (and may be slightly larger for an interference fit) so as to seal against the inner surface of the pipe or conduit such that substantially all flow through the pipe or conduit passes through the flow restrictor.

When viewed from a second aspect, the present disclosure provides a liquid conduit, comprising a flow restrictor according to any of the examples of the first aspect mounted therein so as to limit liquid flow. For example, the liquid conduit may be a pipe, a hose, or the like.

### BRIEF DESCRIPTION OF DRAWINGS

One or more non-limiting examples will now be described, by way of example only, and with reference to the accompanying figures in which:
Figure 1 shows a flow restrictor with a first obstructer and a second obstructer;
Figure 2 shows cross-sectional views of the first and second obstructers when viewed along the flow path, as well as the overlap between the first and second obstructers;
Figure 3 shows two additional relative positions of the first and second obstructers of Figure 2, as well as the overlap between the obstructers in each of these positions;
Figures 4a to 4e show cross-sectional views along the flow path of several alternative shapes of first and second obstructers for the flow restrictor shown in Figure 1; and
Figure 5 shows the flow restrictor of Figure 1 installed in a liquid conduit.

### DETAILED DESCRIPTION

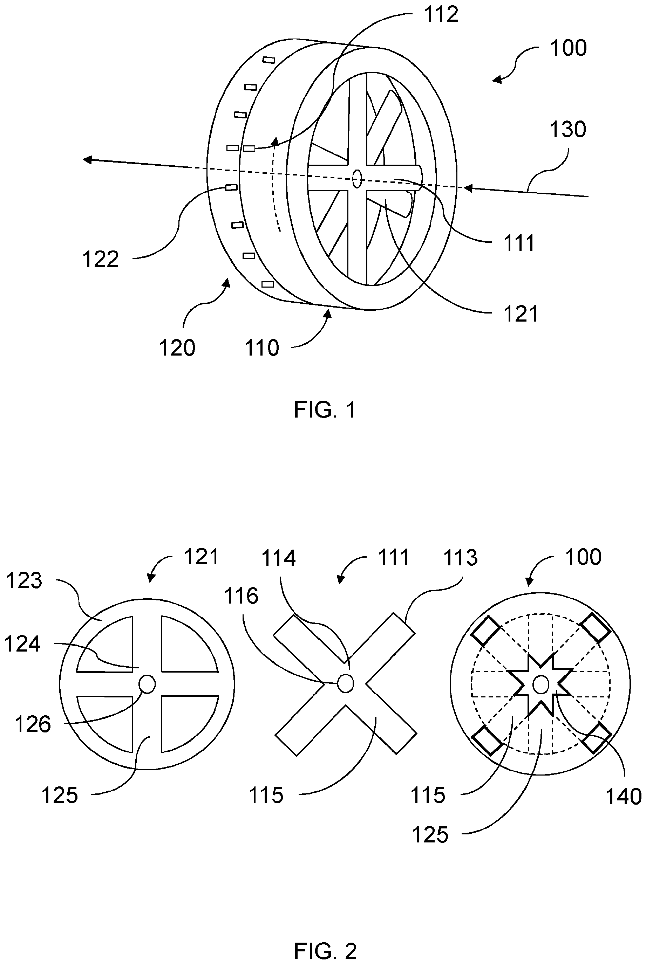

Figure 1 shows a flow restrictor 100 having a flow path 130. The flow restrictor 100 includes a first obstructer 111 and a second obstructer 121.

The first obstructer 111 is arranged to occupy a first area of the flow path 130 and the second obstructer 121 is arranged to occupy a second area of the flow path 130. In Figure 1, it can be seen that the first obstructer 111 and the second obstructer 121 partially overlap when viewed along the flow path 130. The position of the first obstructer 111 is movable relative to the second obstructer 121 in order to vary the overlap between the first obstructer 111 and the second obstructer 121. When the first area and the second area overlap, the area of the flow path that is blocked is reduced by the area of the overlap (i.e. in overlapped areas, the flow path is effectively only obstructed by one obstructer, not both). Therefore, as the area of the overlap is increased, the area of the flow path that is blocked by the first obstructer 111 and the second obstructer 121 in combination decreases. This results in a greater achievable flow rate (i.e. less restricted flow). Conversely, as the area of the overlap is decreased, the area of the flow path that is blocked becomes increased. This results in a lower achievable flow rate (i.e. more restricted flow).

The flow path 130 is shown along an axis of the flow path 130, which in this example is a central axis. In this example, the relative position of the first obstructer 111 and the second obstructer may be varied by rotating the first obstructer 111 around this axis. In other examples, movement of the first obstructer relative to the second obstructer could be lateral movement, or a rotation about another axis. In some examples, fluid may flow in either direction along the flow path 130.

In this example, the restrictor 100 has a first piece 110, which includes the first obstructer 111. In this example, the restrictor 100 has a second piece 120, which includes the second obstructer 121. The first piece 110 in this example is adjacent to the second piece 120 such that the first obstructer 111 is adjacent to the second obstructer 121 in the direction of the flow path 130.

The first piece 110 in this example has a first visual indicator 112 and the second piece 120 has a plurality of second visual indicators 122. When the first visual indicator 112 aligns with one of the second visual indicators 122, the overlapping area between first obstructer 111 and the second obstructer 121 corresponds to a known and predetermined overlapping area.

In this example, the flow restrictor 100 includes a locating mechanism (not shown) to locate the position of the first obstructer 111 relative to the second obstructer 121 in one of a plurality of pre-determined positions. The locating mechanism may be a detent mechanism. By locating the position of the first obstructer 111 relative to the second obstructer 121, the size of the overlapping area between them may be set at a particular value and thus the flow restrictor 100 can be set at a particular flow restriction.

In this example, the locating mechanism allows the position of the first obstructer 111 relative to the second obstructer 121 to be fixed in any one of the positions where the first visual indicator 112 aligns with a second visual indicator 122. Therefore, the first visual indicator 112 and the second visual indicators 122 together indicate the current size of the overlapping area (and thus the current flow restriction).

The locating mechanism could lock the relative positions of the first obstructer 111 and the second obstructer 121, e.g. prevent any movement whatsoever. However, in this example the locating mechanism allows rotation of the first obstructer 111 relative to the second obstructer 121 in one direction. In this example, the locating mechanism allows the first obstructer 111 to rotate clockwise relative to the second obstructer, for example the first obstructer 111 is allowed to rotate clockwise about the axis of the flow path 130. This may be achieved for example with a dial lock mechanism or a ratchet and pawl mechanism that prevents rotation in one rotational direction.

In this example, the locating mechanism includes a detent mechanism which defines several relative positions of the first obstructer 111 and the second obstructer 121. The detent mechanism applies a retaining force to retain the first obstructer 111 in a fixed position relative to the second obstructer 121. Hence, a force greater than the retaining force must be applied to change the relative positions of the first obstructer 111 and the second obstructer 121.

The retaining force may be, for example, a magnetic retaining force (e.g. alignment of two attracting magnets), a spring force or the like. In this example, fixing the position of the first obstructer 111 relative to the second obstructer 121 is achieved by using a sprung detent such as a sprung ball detent. The ball and spring may be provided on the second obstructer 121. A corresponding series of recesses may be provided on the first obstructer 111 such that engagement of the ball in one of the recesses defines a predetermined relative position. It will be appreciated that the ball and spring may equally be provided on the first obstructer 111 and the recesses provided on the second obstructer 121. In other examples, projections may be provided instead of recesses and a correspondingly shaped recessed head may be provided in place of the ball. This mechanism enables rotation of the first piece 110 relative to the second piece 120 between a certain number of fixable positions. When in each fixed position, a retaining force must be overcome to change position (e.g. the force to push the ball back against the spring so as to leave the recess). In addition, in this example, a ratchet and pawl mechanism is provided, with the ratchet on one of the obstructers 111, 121 and the pawl on the other obstructer 111, 121. In this example, the ratchet mechanism allows rotation of the first piece 100 relative to the second piece 200 only in one direction, which in this example is clockwise when viewed along the direction of the flow path 130.

In this example, the fixable relative positions of the first obstructer 111 and the second obstructer 121 each correspond to a certain overlap area. Each overlap area may provide a restriction of the flow path which is appropriate for a certain flow limit. For example, the fixable relative positions may be appropriate to limit the flow rate to approximately 0.15 l/min, 0.25 l/min, 2.2 l/min and/or 3.2 l/min. The fixable positions may correspond with flow rates evenly spaced between a lowest flow rate, for example 0.2 l/min, and a highest flow rate, for example 3.2 l/min in steps of 0.2 l/min. Alternatively, the fixable positions may correspond with flow rates unevenly distributed between the lowest and highest flow rate. In some examples, the flow restrictor 100 may be suitable for only part of this range. For example, one flow restrictor may provide a range of 0.1 l/min to 0.5 l/min and another flow restrictor may provide a range of 2 l/min to 3.5 l/min. It will of course be appreciated that flow rates outside of these ranges are possible and will depend on the geometry of the flow restrictor and its obstructers.

Figure 2 shows three cross-sectional views of the obstructers 111, 121. The left hand view is of the second obstructer 121, the middle view is of the first obstructer 111 and the right hand view shows both the first obstructer 111 and the second obstructer 121 axially aligned such that the first obstructer 111 is behind the second obstructer 121. This view also shows the overlap 140 between the first obstructer 111 and the second obstructer 121. To highlight the overlap 140, the first obstructer 111 and the second obstructer 121 are shown in dotted lines in this right-hand view while the overlap 140 is shown in solid lines.

In this example, the second obstructer 121 has an outer rim 123, a central hub 124 and several radially extending projections 125. In this example, there are four radially extending projections 125, which extend between the outer rim 123 and the central hub 124. A spindle 126 is mounted at the centre of the central hub 124. In other examples, there may be fewer or more than four radially extending projections. In other examples, the radially extending projections may extend from the central hub 124 part-way towards the outer rim 123 or vice-versa. In this example, the four radially extending projections 125 form the shape of a cross.

In this example, the first obstructer 111 has a central hub 114 and several radially extending projections 115 extending therefrom in the form of four blades. In this example, there are four radially extending projections 115. In other examples, there may be fewer or more than four radially extending projections, each of which may extend only from the central hub 114 less than the full radius of the flow path. In this example, the four radially extending projections 115 form the shape of a cross. The first obstructer 111 also has a central hole 116 sized to fit over the spindle 126 of the second obstructer 121 so as to mount it rotatably thereon.

In this example, the outer rim 123 of the second obstructer 121 occupies part of the flow path. The outer rim 123 thus provides an obstruction in the flow path that is not varied by relative movement of the first and second obstructers 111, 121 but instead permanently obstructs the flow path, thereby putting an upper limit on the flow through the restrictor. Increasing the radial extent of this rim 123 will reduce the maximum flow through the restrictor.

In this example, the central hub 114 of the first obstructer 111 is rotatably mounted to the central hub 124 of the second obstructer 121 via the spindle 126 and the mounting hole 116. In other examples, the first obstructer 111 may be rotatably mounted to the second obstructer 121 in another manner. For instance, the second obstructer 121 may be provided with a housing which extends axially from the outer circumference of the outer rim 123, and the first obstructer 111 may be rotatably mounted within that housing.

An overlap 140, as can be seen in the right hand view of Figure 2, is defined by the overlap between the area of the flow path blocked by the first obstructer 111 and the area of the flow path blocked by the second obstructer 121. By changing the relative positions of the first obstructer 111 and the second obstructer 121, the overlap may be varied which in turn varies the area of the flow path blocked by the first obstructer 111 and the second obstructer 121 in combination.

In this example, both the first obstructer 111 and the second obstructer 121 are rotationally symmetric about the axis of the flow path. In this example, both the first obstructer 111 and the second obstructer 121 have 4-fold rotational symmetry about the axis of the flow path. Therefore, the overlap 140 also has 4-fold rotational symmetry about the axis of the flow path.

In this example, the size and shape of the radial projections 115 of the first obstructer 111 is the same as the size and shape of the radial projections 125 of the second obstructer 121. Therefore, in certain positions the radial projections 115 of the first obstructer 111 may fully overlap with the radial projections 125 of the second obstructer 121. In this example, these positions define the maximum achievable flow rate through the restrictor 100.

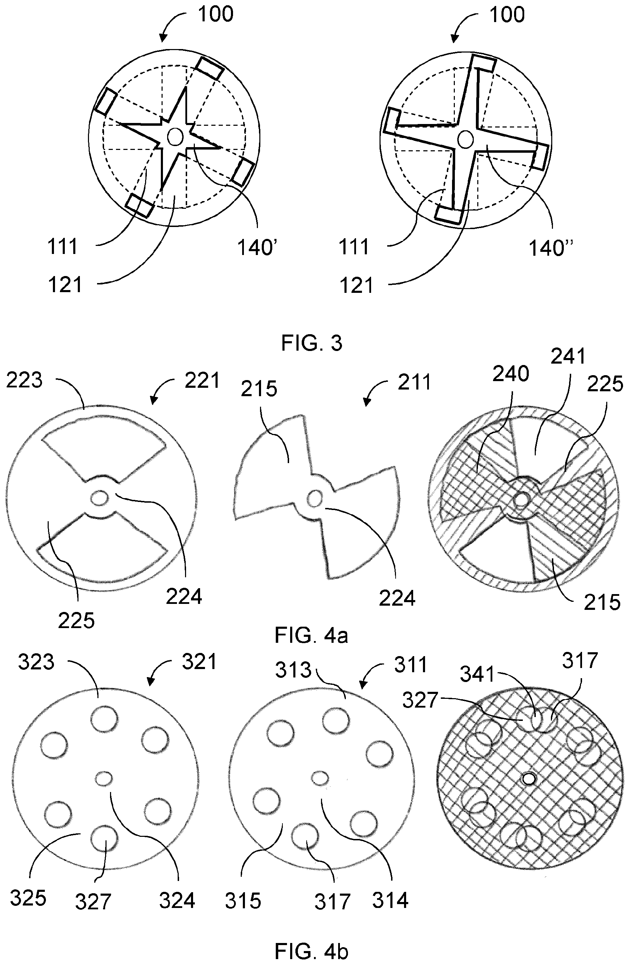

Figure 3 shows two additional relative positions of the first obstructer 111 and the second obstructer 121. As can be seen in Figure 3, by varying the relative positions of the first obstructer 111 and the second obstructer 121, the overlap 140', 140" between the first obstructer 111 and the second obstructer 121 may be varied. The relative positions shown in Figure 3 may correspond to fixable positions of the first obstructer 111 relative to the second obstructer 121, each defining a different flow restriction.

Figures 4a to 4e show cross-sectional views along the flow path 130 of several alternative shapes of first obstructers and second obstructers for the flow restrictor 100 shown in Figure 1. In some of these examples, the first obstructer and/or the second obstructer includes an outer rim and/or a central hub. In some examples, the first obstructer is similar to the second obstructer, whereas in other examples the first obstructer is dissimilar to the second obstructer. While in each of these examples the flow path is cylindrical, this is not necessarily always the case. While for each of the examples provided, at least one of the first obstructer or the second obstructer includes an outer rim, this is also not necessarily always the case. For example, both obstructers could extend radially outwards from a central hub, without having an outer rim, or both obstructers could extend radially inwards from an outer rim, without having a central hub.

Figure 4a shows a second obstructer 221 having a bow-tie shaped profile. The second obstructer 221 has two radially extending protrusions 225, which extend between a central hub 224 and an outer rim 223.

Figure 4a also shows a first obstructer 211. The first obstructer 211 also has a bow-tie shaped profile. The first obstructer 211 has two radial extensions 215, extending radially outwards from a central hub 224. However, the first obstructer 211 does not include an outer rim.

The right hand side of Figure 4a shows the combined effect of the first obstructer 211 and the second obstructer 221. In this view, the two obstructers are hatched differently such that the overlap 240 between the first obstructer 211 and the second obstructer 221 can be seen by the area showing both hatchings. An unobstructed part of the flow path 241 is also shown. The size of these unobstructed areas determines the flow restriction.

Figure 4b shows a second obstructer 321 having an outer rim 323, a central hub 324 and several radial extensions 325 extending between the central hub 324 and the outer rim 323. The second obstructer 321 has a plurality of apertures 327 provided through it. These may be formed by drilling for example. Figure 4b also shows a first obstructer 311, which in this example is the same as the second obstructer 321. Hence, the first obstructer 311 also has a plurality of apertures 317 formed through it and the first obstructer also has radial extensions 315 extending between a central hub 314 and an outer rim 313.

As can be seen in Figure 4b (which again shows the two obstructers 311, 321 with different hatching so as to illustrate the overlap), partially overlapping the apertures 317, 327 results in an unobstructed area 341 of the flow path that is not blocked by the either of the first obstructer 311 or the second obstructer 321 (this being the area where the apertures 317, 327 overlap).

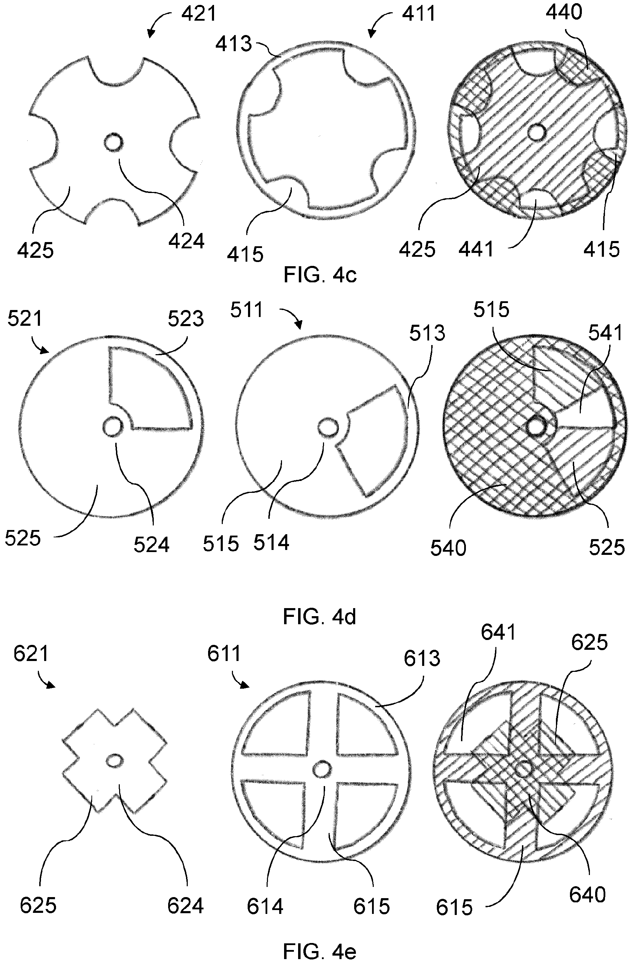

Figure 4c shows an example where a second obstructer 421 has four projections 425, which extend radially from a central hub 424. In Figure 4c, the first obstructer 411 has four projections 415 extending radially inwards from an outer rim 413. However, in this example the first obstructer 411 does not have a central hub. An overlap area 440 can be seen in the right hand view (showing the obstructers 411, 421 with different hatching), i.e. the area of the flow path obstructed by both the first obstructer 411 and the second obstructer 421. An area 441 of the flow path which is not blocked by the either of the first obstructer 411 and the second obstructer 421 can also be seen.

Figure 4d shows an example where a second obstructer 521 has a single projection 425 radially extending between a central hub 524 and an outer rim 523. The first obstructer 511 is similar (or identical) to the second obstructer 521, also having a singular radial projection 515 extending between a central hub 514 and an outer rim 513. The overlapping area 540 in a certain relative position is shown in the right hand view of Figure 4d (again with the two obstructers 511, 521 shown with different hatching), as well as the area 541 which is not blocked by either obstructer. Having two identical obstructers makes manufacturing simpler as only a single piece is required rather than two distinct pieces.

Figure 4e shows an example where a second obstructer 621 comprises radially extending projections 625 extending radially from a central hub 624. The radially extending projections 625 do not extend all the way to the edge of the flow path. The first obstructer 611 shown in Figure 4e has an outer rim 613, a central hub 614 and four radially extending projections 615 extending between the outer rim 613 and the central hub 614. An overlap 640 between the first obstructer 611 and the second obstructer 621 is also shown in the right hand view of Figure 4e (which again shows the two obstructers with different hatching so as to highlight the overlapping area).

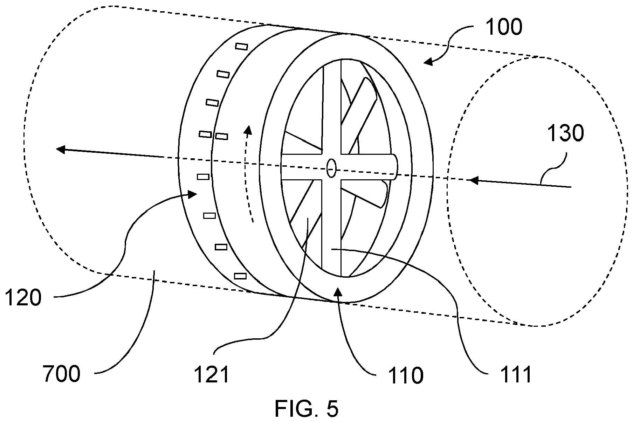

Figure 5 shows a liquid conduit 700 including the flow restrictor 100 of Figure 1 mounted within so as to limit liquid flow along the flow path 130. In this example, the liquid conduit is a hose 700. However, in other examples the liquid conduit 700 could be any suitable flow conduit, for example a pipe, an outlet of a tank or the like.

In this example, the restrictor 100 is secured in place within the liquid conduit 700 by a fastener (not shown), for example a jubilee clip or the like. The fastener is tightened around the liquid conduit 700 so as to clamp the restrictor 100 in place. In other examples, no fastener is required. For example, there may be a friction fit (or interference fit) between the restrictor 100 and the conduit 700, thus making the use of a fastener not necessary.

In this example, the outer surface of the restrictor 100 is in contact with the inner surface of the liquid conduit 700. This may prevent any fluid flow between the inner surface of the liquid conduit 700 and the outer surface of the restrictor 100.

In this example, the first piece 110, comprising the first obstructer 111, is a cylindrical piece, having an outer diameter approximately the same size as the inner diameter of the liquid conduit 700. Similarly, in this example the second piece 120, comprising the second obstructer 121, is a cylindrical piece, having an outer diameter approximately the same size as the inner diameter of the liquid conduit 700. In other examples, the outer diameter of the first piece 110 and the second piece 120 may be slightly larger than the inner diameter of the conduit 700 so as to form an interference fit.

In this example, the restrictor 100 is appropriately sized so as to be installed in a standard size of hose. For example, the outer diameters of the first piece 110 and the second piece 120 may be approximately a half-inch / 13 mm, or slightly larger than this, so as to fit tightly within a half-inch / 13 mm hose.

It will be appreciated by those skilled in the art that this disclosure has been illustrated by describing one or more specific examples thereof, but is not limited to these examples; many variations and modifications are possible, within the scope of the accompanying claims.

## Claims

1. A flow restrictor having a flow path, the flow restrictor comprising:
a first obstructer arranged to occupy a first area of the flow path; and
a second obstructer arranged to occupy a second area of the flow path;
wherein the first obstructer is movable relative to the second obstructer so as to vary an amount of overlap between the first area and the second area and thereby vary the area of the flow path that is blocked by the combination of the first obstructer and the second obstructer.

2. A flow restrictor as claimed in any preceding claim, wherein the first obstructer and/or the second obstructer comprises one or more radially extending projections.

3. A flow restrictor as claimed in claim 2, wherein the radially extending projections of the first obstructer and/or the second obstructer extend radially inwardly from an outer rim.

4. A flow restrictor as claimed in claim 3, wherein the outer rim occupies part of the flow path.

5. A flow restrictor as claimed in claim 2, 3 or 4, wherein the radially extending projections of the first obstructer and/or the second obstructer extend radially outwardly from a central hub.

6. A flow restrictor as claimed in claim 5, wherein the first obstructer comprises a first central hub, wherein the second obstructer comprises a second central hub and wherein the first central hub is rotatably mounted to the second central hub.

7. A flow restrictor as claimed in any preceding claim, wherein the first obstructer and the second obstructer each have at least 2-fold rotational symmetry around the axis of the flow path; optionally
wherein at least one of the first obstructer and the second obstructer comprises a cross shape.

8. A flow restrictor as claimed in any preceding claim wherein the first obstructer is the same shape as the second obstructer; optionally
wherein the first area is the same as the second area.

9. A flow restrictor as claimed in any preceding claim wherein the first obstructer is rotatable relative to the second obstructer;
optionally wherein the first obstructer is rotatable relative to the second obstructer in only one direction.

10. A flow restrictor as claimed in any preceding claim, comprising a locating mechanism arranged to locate the first obstructer and the second obstructer in one of two or more predefined relative positions; optionally
wherein each of the two or more predefined relative positions defines a flow rate suitable for one of the following:
a galley beverage maker;
a galley espresso maker;
a galley water heater;
a galley steam oven;
a galley waste disposal unit;
a galley faucet.

11. A flow restrictor as claimed in claim 10, wherein the locating mechanism is arranged such that when the first obstructer and the second obstructer are in a predefined relative position, the locating mechanism restricts further relative movement of the first and second obstructers.

12. A flow restrictor as claimed in any of claims 10 or 11, further comprising a visual indicator for each predefined relative position.

13. The flow restrictor of any preceding claim wherein the restrictor comprises a first piece and a second piece;
wherein the first piece comprises the first obstructer;
wherein the second piece comprises the second obstructer; and
wherein the first piece is adjacent to the second piece in a flow direction.

14. A flow restrictor as claimed in claim 13,
wherein the first piece is cylindrical;
wherein the second piece is cylindrical; and
wherein an outer surface of the first piece is flush with an outer surface of the second piece.

15. A liquid conduit, comprising a flow restrictor of any preceding claim mounted therein so as to limit liquid flow.
